# EUROPEAN PATENT APPLICATION

(11) **EP 1 845 284 A1**
(43) Date of publication of application: **17.10.2007**
(21) Application number: 06711534.5
(22) Date of filing: 11.01.2006
(51) Int. Cl.: F16G 1/08, F16G 5/06, F16G 5/20

(54) **FRICTION TRANSMISSION BELT**

(30) Priority: 12.01.2005 JP 2005005498
(71) Applicant: Bando Chemical Industries Ltd., Kobe-shi, Hyogo 652-0882 (JP)
(72) Inventor: SHIRIIKE, Hiroyuki, ri 3-chome, Hyogo-ku, Kobe-shi, Hyogo, 6 (JP); YOSHIDA, Yasuhiko, ri 3-chome, Hyogo-ku, Kobe-shi, Hyogo, 6 (JP); TACHIBANA, Hiroyuki, ri 3-chome, Hyogo-ku, Kobe-shi, Hyogo, 6 (JP)
(74) Representative: Brehm, Hans-Peter
(86) International application number: PCT/JP2006/300185
(87) International publication number: WO 2006/075598

(57) **Abstract**

The present invention provides a friction transmission belt in which slip noise caused at the time when a belt drive portion is immersed in water is suppressed and which has excellent bending fatigue strength and can be produced by simple working steps.

A friction transmission belt
which contains a compressed rubber layer containing an ethylene-α-olefin elastomer, short fibers, and silica and having a monolayer structure.

## Description

### TECHNICAL FIELD

The present invention relates to a friction transmission belt.

### BACKGROUND ART

In the friction transmission belt for motive power transmission to be used for auxiliary driving of automobiles, or the like, the slip sound generated conventionally at the time of belt driving is regarded as noise and thus it has been a problem to be improved for making automobile calm. There is one kind noise generated from the belt is slip noise caused at the time when water penetrates an engine room and the belt is immersed in water. As a technique to be employed conventionally for improving the slip sound at the time of immersion in water, there have been adding short fibers in the belt rib part or applying a water-repelling agent to the surface of the belt rib part.

However, in the case of the transmission belt containing short fibers in the belt rib part, although the slip sound at the time of immersion in water can be improved by using short fibers, because the modulus of elasticity is quite different between the short fibers and rubber, the stress is converged upon the interface of the short fibers and rubber when bending fatigue affects the transmission belt and the interface becomes a cracking starting point and a crack is grown to shorten the product life.

On the other hand, with respect to the method for applying a water-repelling agent to the belt rib part, the working steps for applying the water-repelling agent after the rib shape is formed are increased to cause a problem that the production cost of the belt is increased. Further, the water-repelling agent on the surface is difficult to exist stably due to the alteration with the lapse of time in the rib part and compressed rubber because of wear or the like.
Further, as another method besides the above-mentioned methods, it has been tried for suppressing slip sound at the time of immersion in water by adding silica to the rubber which is to be brought into contact with a pulley.

For example, Patent Document 1 discloses a V-ribbed belt with improved noise occurrence because of slip caused at the time of water pouring by composing at least a portion of the rib part side surface using a rubber mixture containing an ethylene-α-olefin elastomer, silica, and short fibers. Here, there is disclosed only a belt having the rib part of a three-layer structure composed of a rubber layer containing no silica, a rubber layer containing silica, and a rubber layer containing no silica and in the case of partial formation of the rubber layer containing silica in the three-layer structure for the belt rib part, rubbers with different blending have to be used, which results in a problem of complication of the working steps.

Patent Document 2 discloses a transmission belt with suppressed pressure sensitive adhesion wear without losing the reinforcing effect and decreased noise at the time of driving by using a chloroprene rubber composition containing prescribed amounts of surface treated silica, carbon black, a vulcanization promoting agent, a vulcanization agent, and short fibers for the compressed rubber layer and having specified physical properties. Patent Document 3 discloses a transmission belt made of rubber obtained by adding silica and co-crosslinking agent to hydrogenated nitrile rubber containing an unsaturated carboxylic acid metal salt and causing crosslinking by adding an organic peroxide. However, in these documents, there is no detailed description on the use of an ethylene-α-olefin elastomer for the compressed rubber layer.

Accordingly, with respect to a friction transmission belt for motive power transmission, it has been desired to develop a friction transmission belt whose production working steps are easy and which can suppress the slip noise generated at the time of immersion of the belt drive part in water and is excellent in the bending fatigue strength at the time of belt running.

Patent Document 1: Japanese Kokai Publication 2003-247604
Patent Document 2: Japanese Kokai Publication 2002-69240
Patent Document 3: Japanese Kokai Publication 2003-221470

### DISCLOSURE OF THE INVENTION

### PROBLEMS FOR SOLVING THE INVENTION

In view of the above state of the art, the present invention aims to provide a friction transmission belt in which slip noise caused at the time when a belt drive portion is immersed in water is suppressed and which has excellent bending fatigue strength and can be produced by simple working steps.

### MEANS FOR SOLVING THE PROBLEMS

The present invention provides a friction transmission belt
which contains a compressed rubber layer containing an ethylene-α-olefin elastomer, short fibers, and silica and having a monolayer structure.

The content of the above-mentioned short fibers is 5 to 25 parts by weight to 100 parts by weight of the above-mentioned ethylene-α-olefin elastomer, and the content of the above-mentioned silica is 5 parts by weight or higher and less than 60 parts by weight to 100 parts by weight of the above-mentioned ethylene-α-olefin elastomer, and the total content of the above-mentioned short fibers and silica is 30 to 65 parts by weight to 100 parts by weight of the ethylene-α-olefin elastomer.
The above-mentioned friction transmission belt is preferably a V-ribbed belt, a low edge belt, or a flat belt.
Hereinafter, the present invention will be described more in detail.

The present invention provides a friction transmission belt which contains a compressed rubber layer containing an ethylene-α-olefin elastomer, short fibers, and silica and having a monolayer structure. Accordingly, the friction transmission belt can suppress the slip noise generated at the time of immersion of the belt drive part in water and is excellent in the bending fatigue strength at the time of belt running. Further, the compressed rubber layer has a monolayer structure. Therefore, the belt can be produced simply as compared with a friction transmission belt comprising a compressed rubber layer of a multilayer structure such as a trilayer structure or the like.

Generally, with respect to the friction transmission belt, although the slip sound at the time of immersion in water can be improved by adding short fibers in the belt rib part, cracking tends to occur when the bending fatigue affects the belt. In the present invention, the amount of the short fibers to be added to the compressed rubber layer is decreased and silica is added instead, so that portions where the stress convergence unevenly occurs when the belt receives bending power are lessened, which results in difficulty of occurrence of cracking and also the belt surface can be provided with proper roughness to suppress slip sound generation. Accordingly, the friction transmission belt of the present invention has both of excellent suppression of slip sound generation and bending fatigue strength.

The water pouring slip sound generated in the case where the friction transmission belt is immersed in water is generated due to occurrence of stick slip because of existence of water in the interface of the compressed rubber layer surface and the pulley, and addition of the silica in the present invention coarsens the surface roughness of the compressed rubber surface, so that the water film at the time of such water pouring is scarcely formed and as a result, the slip at the time of water pouring is suppressed and generation of the water pouring slip sound can be suppressed.

The above-mentioned compressed rubber layer contains the ethylene-α-olefin elastomer, short fibers, and silica.
The above-mentioned ethylene-α-olefin elastomer to be used may be rubbers made of copolymers of α-olefin excluding ethylene with ethylene and diene (non-conjugated diene), their partially halogen-substituted compounds; or mixtures of two or more kinds of these compounds. The α-olefin excluding ethylene to be used may be preferably at least one kind compound selected from propylene, butene, hexene, and octene. Among them, ethylene-propylene-diene type rubber (hereinafter, abbreviated as EPDM) is preferable in terms of capability of suppression of the slip sound and excellent bending fatigue strength. Further, their halogen substituted compounds and blends with other rubbers may be also usable. The diene type is preferably ethylidene norbornene (ENB) in terms of the effect of the present invention. Further, ethylene-propylene type rubber (EPR) containing no diene component may be also selected.

The ethylene content of the above-mentioned ethylene-α-olefin elastomer (the content of structural unit derived from ethylene in the ethylene-α-olefin elastomer) is preferably 55 to 70% by weight in 100% by weight of the total of ethylene-α-olefin and diene composing the above-mentioned ethylene-α-olefin-diene rubber. In the case of using the ethylene-α-olefin elastomer having the ethylene content in the above-mentioned range in combination with silica and short fibers, it is made possible to obtain high rubber hardness and sufficiently high belt hardness and at the same time water pouring slip sound can be sufficiently suppressed. Therefore, in the case of using the above-mentioned ethylene-α-olefin elastomer, the water pouring slip sound can be more preferably suppressed and at the same time, the friction transmission belt is provided with more excellent bending fatigue strength.

If the above-mentioned ethylene content is lower than 55% by weight, the rubber may possibly become soft. If it exceeds 70% by weight, the rubber may become too hard to be used for the belt. The above-mentioned ethylene content is preferably 55 to 65% by weight.

Examples of commercialized products of the above-mentioned ethylene-α-olefin elastomer are Nordel IP 4640 (manufactured by DuPont Dow Elastomer)

Besides the above-mentioned ethylene-α-olefin elastomer, the above-mentioned compressed rubber layer may contain other polymers such as hydrogenated nitrile rubber, chloroprene rubber, natural rubber, CSM, and SBR to an extent that the effect of the present invention is not inhibited.

Examples of the above-mentioned short fibers may be short fibers of nylon 6, nylon 66, polyesters, cotton, and aramides.
The length, the shape and the like of the above-mentioned short fibers may be properly adjusted to improve the suppression of slip sound, and in general, the length of the above-mentioned short fibers is preferably 0.5 to 3.0 mm.

In the above-mentioned compressed rubber layer, the content of the above-mentioned short fibers is preferably 5 to 25 parts by weight to 100 parts by weight of the above-mentioned ethylene-α-olefin elastomer (on the basis of solid matter). If it is less than 5 parts by weight, the rubber may possibly become soft. If it exceeds 25 parts by weight, cracking tends to occur due to stress convergence when the bending fatigue affects the belt.

The above-mentioned silica is not particularly limited and conventionally known ones can be used and examples thereof are dry silica, wet silica, and surface treated silica. The above-mentioned wet silica (hydrous silicic acid) can be generally obtained by a method of causing reaction of sodium silicate with a mineral acid and salts in an aqueous solution and as compared with dry silica, the wet silica has a large number of silanol groups in the front face and therefore has high polarity. Further, the wet silica has advantageous points that the cost is low as compared with that of the dry silica and the processability is good. The above-mentioned surface treated silica is provided with improved dispensability by surface treatment of dry silica or wet silica with a silane coupling agent.

The content of the above-mentioned silica in the above-mentioned compressed rubber layer is preferably 5 parts by weight or higher and less than 60 parts by weight to 100 parts by weight of the above-mentioned ethylene-α-olefin elastomer (on the basis of solid matter) . Addition of silica in a content in the above-mentioned range makes it possible to satisfy both of excellent suppression of water pouring slip sound generation and bending fatigue strength. If it is less than 5 parts by weight, the rubber surface roughness becomes small and a water film may be formed to easily cause stick slip. If it is 60 parts by weight or higher, the rubber becomes too hard to cause cracks due to the bending fatigue by running and to shorten the belt life.

In the above-mentioned compressed rubber layer, the total content of the above-mentioned silica and short fibers is preferably 30 to 65 parts by weight to 100 parts by weight of the above-mentioned ethylene-α-olefin elastomer (on the basis of solid matter). If the total content of the silica and short fibers is within the above-mentioned range, it is made possible to satisfy both of excellent suppression of water pouring slip sound generation and bending fatigue strength. If it is less than 30 parts by weight, no effect for suppressing the slip sound may be caused. If it exceeds 65 parts by weight, the bending life may be shortened. Adjustment of the contents of the silica and short fibers respectively, and the total content of the silica and short fibers in the above-mentioned ranges in the compressed rubber layer makes it possible to improve the slip sound suppression and the bending fatigue strength.

The above-mentioned silica may be dispersed in the entire body of the above-mentioned compressed rubber layer. The fact that the silica is dispersed in the entire body of the compressed rubber layer means that the silica exists while being evenly dispersed in the above-mentioned compressed rubber layer of the monolayer structure but does not mean that the silica unevenly exists in the center part or the surface part in the compressed rubber layer. The compressed rubber layer in which the silica is dispersed entirely in such a manner can be obtained by producing the compressed rubber layer of a monolayer structure by a conventionally known method using a mixture containing the ethylene-α-olefin elastomer, short fibers, silica, and if necessary other components.

The above-mentioned compressed rubber layer is preferable to contain a silane coupling agent. If silica is added, the rigidity is increased and cracking tends to occur, however addition of the silane coupling agent can suppress occurrence of cracking.
Examples of the above-mentioned silane coupling agent may be 3-aminopropyltriethoxysilane, 3-aminopropyltrimethoxysilane, N-β-(aminoethyl) γ-aminopropyltrimethoxysilane, 3-mercaptopropyltrimethoxysilane, γ-ureidopropyltriethoxysilane, 3-cyanopropyldimethylchlorosilane, 3-[N-allyl-N-(2-aminoethyl)]aminopropyltrimethoxysilane, P-[N-(2-aminoethyl)aminomethyl]phenetyltrimethoxysilane, N-(2-aminomethyl)-3-aminopropylmethyldimethoxysilane, 1-(3-aminopropyl)-1,1,3,3,3-pentamethyldisiloxane, 3-aminopropyltris(trimethylsiloxane)silane, α, ω-bis(3-aminopropyl)polydimethylsiloxane, α, ω-bis(3-aminopropyl)polydimethylsiloxane, 1,3-bis(3-aminopropyl)-1,1,3,3-tetramethyldisiloxane, α, ω-bis(mercaptomethyl)polydimethylsiloxane, α, ω-bis(mercaptomethyl)polydimethylsiloxane, 1,3-bis(mercaptomethyl)-1,1,3,3-tetramethyldisiloxane, α, ω-bis(3-mercaptopropyl)polydimethylsiloxane, α, ω-bis(3-mercaptopropyl)polydimethylsiloxane, 1,3-bis(3-mercaptomethyl)-1,1,3,3-tetramethyldisiloxane, N,N-bis[(methyldimethoxysilyl)propyl]amine, N,N-bis[3-(methyldimethoxysilyl)propyl]ethylenediamine, N,N-bis[3-(trimethoxysilyl)propyl]amine, N,N-bis[3-(trimethoxysilyl)propyl]ethylenediamine, 3-mercaptopropyltris(trimethylsiloxy)silane, 1-trimethoxysil-4,7,10-triazadecane, N-[(3-trimethoxysilyl)propyl]triethylenetetramine, and N-3-trimethoxysilylpropyl-m-phenylenediamine.

The content of the above-mentioned silane coupling agent is preferably 0.3 to 20 parts by weight and more preferably 0.3 to 8 parts by weight to 100 parts by weight of the above-mentioned ethylene-α-olefin elastomer (on the basis of solid matter) . If it is out of the above-mentioned range, the effect to suppress occurrence of cracking may not be caused sufficiently.

The rubber mixture for forming the above-mentioned compressed rubber layer can be crosslinked by sulfur or a peroxide.
The above-mentioned peroxide for crosslinking is not particularly limited and common organic peroxides may be used and examples thereof are dicumyl peroxide, di-tert-butyl peroxide, tert-butylcumyl peroxide, benzoyl peroxide, 1,3-bis(tert-butylperoxyisopropyl)benzene, 2,5-dimethyl-2,5-di(tert-butylperoxy)hexine-3,2,5-dimethyl-2,5-(benzoylperoxy)hexane, and 2,5-dimethyl-2,5-mono(tert-butylperoxy)hexane.
The addition amount of the above-mentioned organic peroxide may be set properly in accordance with the functional group amount and the molecular weight of the organic peroxide, or diene amount of EPDM, however, in general, they may be added alone or in form of a mixture in an amount of 0.5 to 5 g to 100 g of the ethylene-α-olefin elastomer.

In the case of crosslinking by the peroxide, a crosslinking aid may also be added. Addition of the crosslinking aid is effective to increase the crosslinking density and thereby stabilize the adhesive power and prevent a problem such as pressure sensitive adhesion wear or the like. The above-mentioned crosslinking aid may be those which are used commonly for peroxide crosslinking and examples thereof may include triallyl isocyanurate (TAIC), triallyl cyanurate (TAC), 1, 2-polybutadiene, metal salts of unsaturated carboxylic acids, oximes, guanidine, trimethylolpropane trimethacrylate, ethylene glycol dimethacrylate, N,N'-m-phenylenebismaleimide, and sulfur.

In the case of the sulfur vulcanization, the addition amount of sulfur is preferably 1 to 3 parts by weight to 100 parts by weight of the ethylene-α-olefin elastomer.
In the case of sulfur vulcanization, a vulcanization promoting agent may also be added. Addition of the vulcanization promoting agent can prevent the problem of pressure sensitive adhesion wear by increasing the crosslinking density. The above-mentioned vulcanization promoting agent may be those which are used commonly as a vulcanization promoting agent and examples thereof may be N-oxydiethylenebenzothiazole-2-sulfenamide (OBS), tetramethylthiuram disulfide (TMTD), tetraethylthiuram disulfide (TETD), zinc dimethyldithiocarbamate (ZnMDC), zinc diethyldithiocarbamate (ZnEDC), N-cyclohexylbenzothiazole-2-sulfenamide, and 2-mercaptobenzothiazole, and dibenzothiazolyldisulfide.

The mixture containing ethylene-α-olefin elastomer, short fibers, and silica for forming the above-mentioned compressed rubber layer in the present invention may contain, if necessary, various kinds of chemical agents to be used commonly in rubber industries, e.g. fillers such as carbon black, calcium carbonate, and talc; plasticizers, stabilizers, processing aids, aging prevention agents, and coloring agents, in combination with these components.

The mixture for forming the compressed rubber layer can be obtained by evenly mixing the indispensable components such as the ethylene-α-olefin elastomer with the above-mentioned chemical agents by common mixing means such as rolls and a Bumbury's mixer, if necessary.

In the friction transmission belt of the present invention, the compressed rubber layer has a monolayer structure. The monolayer structure means the compressed rubber layer is formed in form of a single rubber layer. The above-mentioned compressed rubber layer of the monolayer structure can be obtained by forming a compressed rubber layer using one kind mixture containing the ethylene-α-olefin elastomer, short fibers, silica, and if necessary other components.

Examples of the friction transmission belt of the present invention may include those each of which comprises the above-mentioned compressed rubber layer, an adhesive rubber layer being in contact with the compressed rubber layer and containing core wires embedded along the longitudinal direction of the belt, and a top canvas layer being in contact with the adhesive rubber layer.
The friction transmission belt of the present invention may include those which do not have the above-mentioned adhesive rubber layer.

The rubber components to be used for forming the adhesive rubber layer may be those same as exemplified for the compressed rubber layer.
The mixture for forming the adhesive rubber layer may further contain the above-mentioned other components similarly to the case of the above-mentioned compressed rubber layer. The mixture for forming the adhesive rubber layer can be obtained in the same manner as the method for the above-mentioned compressed rubber layer.

Examples of the top canvas layer to be used may be cloths fabricated in plain weave fabrics, twill fabrics, satin fabrics using yarns of cotton, polyamides, polyethylene phthalate, aramide fibers.
The above-mentioned core wires to be used may be preferably polyester core wires, nylon core wires, vinylon core wires, aramide core wires and the like, and among them, examples of the polyester core wires are preferably polyethylene terephthalate and polyethylene naphthalate and examples of the nylon core wires are preferably 6,6-nylon (polyhexamethylene adipamide) and 6 nylon. Examples of the aramide core wires to be used are preferably copoly(p-phenylene)-3,4'-oxydiphenylene-terephthalamide, poly(p-phenylene terephthalamide), and poly(m-phenylene isophthalamide). These core wires are preferable to be embedded in the above-mentioned adhesive rubber layer after being subjected to adhesion treatment with a resorcin-formalin-latex adhesive composition (hereinafter, referred to as RFL adhesive in some cases).

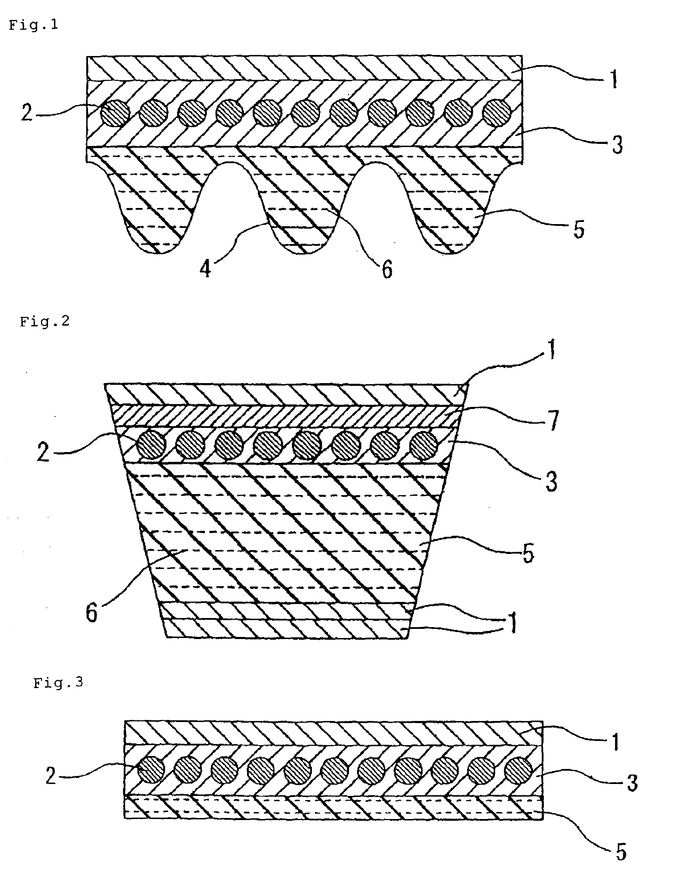

The friction transmission belt of the present invention is preferably a V-ribbed belt, a low edge belt or a flat belt.
Examples of the V-ribbed belt, low edge belt or flat belt may be described with reference to Figs 1 to 3.

Figure 1 is a transverse cross-sectional view (sectional plane perpendicular to the longitudinal direction of a belt) of an example of a V-ribbed belt of the present invention, and on the top face of the belt, a top canvas layer 1 of a single layer or multilayer is formed, and the adhesive rubber layer 3 is laminated adjacent to the inside the canvas layer. In this adhesive rubber layer 3, a plurality of core wires 2 of low elongation consisting of fiber code are embedded at some spaces along the longitudinal direction of the belt. Further, the compressed rubber layer 5 having a monolayer structure is laminated adjacent to the inside this adhesive rubber layer. This compressed rubber layer is formed on ribs 4 that are spaced to each other along the longitudinal direction of the belt. In the compressed rubber layer 5, short fibers 6 are dispersed with the fiber being oriented to the direction of width of the belt in order to enhance side pressure resistance.

Figure 2 is a transverse cross-sectional view of an example of a low edge belt of the present invention, and on the top face of the belt, a top canvas layer 1 of a single layer or multilayer is formed as with the above case and an upper rubber layer 7 is laminated as required, and the adhesive rubber layer 3 in which the core wires 2 are embedded is laminated adjacent to the inside the upper rubber layer as with the above case. Further, the compressed rubber layer 5 is laminated adjacent to the inside this adhesive rubber layer. In many cases, in the compressed rubber layer 5, short fibers 6 are dispersed with the fiber being oriented to the direction of width of the belt in order to enhance side pressure resistance. A top canvas layer 1 of a single layer or multilayer is generally laminated adjacent to the inside the compressed rubber layer.
Figure 3 is a transverse cross-sectional view of an example of a flat belt of the present invention, and the top canvas layer 1, the adhesive rubber layer 3 and the compressed rubber layer 5 having a monolayer structure are laminated as with the above case.

The friction transmission belt in accordance with the present invention can be manufactured by ordinary methods hitherto known. For example, taking a V-ribbed belt for an example, after a sheet of or a plurality of top canvases and unvulcanized sheets of a rubber compound for a adhesive rubber layer are wound around the side of a cylindrical forming drum with a smooth surface, a polyester core wire is spun in a spiral manner around these sheets, and an unvulcanized sheet of a rubber compound for a adhesive rubber layer is wound thereon and then an unvulcanized sheet of a rubber compound for a compressed rubber layer is further wound to form a laminate. This laminate is heated and pressurized in a vulcanizer to be vulcanized to obtain an annular substance. Next, this annular substance is looped between a drive pulley and a driven pulley and a plurality of ribs are formed on the surface with a grinding wheel while running the belt under a prescribed tension. Thereafter, this annular substance is further looped between other drive pulley and other driven pulley and cut to the prescribed width while running the belt to obtain a V-ribbed belt as a product.

With respect to the friction transmission belt of the present invention, the compressed rubber layer contains the ethylene-α-olefin elastomer, silica, and short fibers and has a monolayer structure. Therefore, the belt can maintain strength necessary for a belt, suppress occurrence of cracking at the time of running, and improve the belt slip sound at the time of immersion in water while keeping the bending life. Further, the belt can be produced easily.

### EFFECT OF THE INVENTION

Since the friction transmission belt of the present invention has the above-mentioned configuration, the belt can suppress the slip sound generated at the time of immersion in water and is excellent in the bending fatigue strength. Further, the belt can be produced by simple working steps. Accordingly, the friction transmission belt of the present invention is preferably usable as a belt for motive power transmission such as a belt for driving of automobile' s auxiliaries (dynamo, air conditioner, power steering and the like).

### BEST MODE FOR CARRYING OUT THE INVENTION

Hereinafter, the present invention will be described in more detail with reference to Examples, however it is not intended that the present invention be limited to the illustrated Examples. In descriptions of Examples, "part" and "%" respectively means "part by weight" and "% by weight" unless otherwise specified.

### (Examples 1 to 5 and Comparative Examples 1 and 2)

An unvulcanized sheet of a rubber compound for a compressed rubber layer was firstly produced from a mixture composition shown in Table 1. Amounts of mixture composition shown in Table 1 are indicated in "parts by weight".
Commercialized products employed were as follows. ethylene-propylene-diene rubber (EPDM):
Nordel IP 4640 (ethylene content 55%, diene type ENB, manufactured by DuPont Dow Elastomer)
Chloroprene rubber (CR): Neoprene GRT (sulfur-modified type chloroprene rubber, manufactured by DuPont Dow Elastomer)
Carbon black: HAF Carbon (manufactured by Mitsubishi Chemical Corporation)
Silica: Tokusil GU (manufactured by Tokuyama Corporation) Silane coupling agent: Si-69 (manufactured by Degussa) Softening agent: Sunflex 2280 (paraffin oil, manufactured by Japan Sun Kagaku K.K.)
Vulcanization aid: stearic acid (manufactured by Kao Corporation), zinc oxide (manufactured by Sakai Chemical Industry Co., Ltd.)
Aging prevention agent: Nocrac 224 (manufactured by Ouchi Shinko Chemical Industrial Co., Ltd.)
Organic peroxide: Percumyl D (dicumyl peroxide, manufactured by NOF Corporation)
Short fiber: 66 nylon fibers, 6 de x 1 mm

With respect to the adhesive rubber layer, the following components were mixed and kneaded by a Bumbury's mixer and rolled with calendar rolls and a unvulcanized sheet of a rubber compound for an adhesive rubber layer was produced in the same manner.
Ethylene-propylene-diene rubber (ethylene content 56% by weight, propylene content 36.1% by weight, ethylidene norbornene (ENB) 5.5% by weight, dicyclopentadiene (DCPD) 2.4% by weight, Mooney viscosity ML₁₊₄ (100°C) 60) 100 parts by weight HAF carbon (manufactured by Mitsubishi Chemical Corporation) 50 parts by weight
Silica: Tokusil GU (manufactured by Tokuyama Corporation) 20 parts by weight
Paraffin oil (Sunflex 2280, manufactured by Japan Sun Kagaku K.K.) 20 parts by weight
Vulcanization agent (oil sulfur, manufactured by Hosoi Kagaku K.K.) 3 parts by weight, Vulcanization promoting agent (DM, manufactured by Ouchi Shinko Chemical Industrial Co., Ltd.) 1.4 parts by weight
Vulcanization promoting agent (EZ, manufactured by OuchiShinko Chemical Industrial Co., Ltd.) 0.6 parts by weight Vulcanization promoting agent (TT, manufactured by Ouchi Shinko Chemical Industrial Co., Ltd.) 0.6 parts by weight
Vulcanization aid (stearic acid, manufactured by Kao Corporation) 1 part by weight
Vulcanization aid (zinc oxide, manufactured by Sakai Chemical Industry Co., Ltd.) 5 parts by weight
Aging prevention agent (Nocrac 224 manufactured by Ouchi Shinko Chemical Industrial Co., Ltd.) 2 parts by weight
Aging prevention agent (MB, manufactured by Ouchi Shinko Chemical Industrial Co., Ltd.) 1 part by weight Tackifier (Petroleum Resin Quintone A-100, manufactured by Zeon Corporation) 5 parts by weight

### Production of transmission belt

After a canvas and the above-mentioned unvulcanized sheet of a rubber compound for an adhesive rubber layer were wound around the side of a cylindrical forming drum with a smooth surface, polyester core wires (polyester cord, 1000 denier/2 x 3, upper twist 9.5T/10 cm (Z) was spun in a spiral manner around these sheets. Further, the above-mentioned unvulcanized sheet of a rubber compound for an adhesive rubber layer were wound thereon, and then the unvulcanized sheet of a rubber compound for a compressed rubber layer was wound around this to obtain a laminate. This laminate was heated and pressurized at an internal pressure of 6 kgf/cm² and an external pressure of 9 kgf/cm² at a temperature of 165°C for 35 minutes in a vulcanizer and vulcanized it by steam to obtain an annular substance. Next, this annular substance was mounted on a first drive system comprising a drive roll and a driven roll and a plurality of ribs are formed on the surface with a grinding wheel while running the belt under a prescribed tension. Thereafter, this annular substance was further mounted on a second drive system comprising other drive roll and driven roll and cut to the prescribed width while running the belt to obtain a V-ribbed belt (the compressed rubber layer had a monolayer structure) having three ribs and a peripheral length of 1000 mm as a product.

Each V-ribbed belt obtained in the above-mentioned manner was subjected to the evaluations of belt bending life and slip sound by the following methods. The respective results are shown in Table 1.

### <Belt bending life>

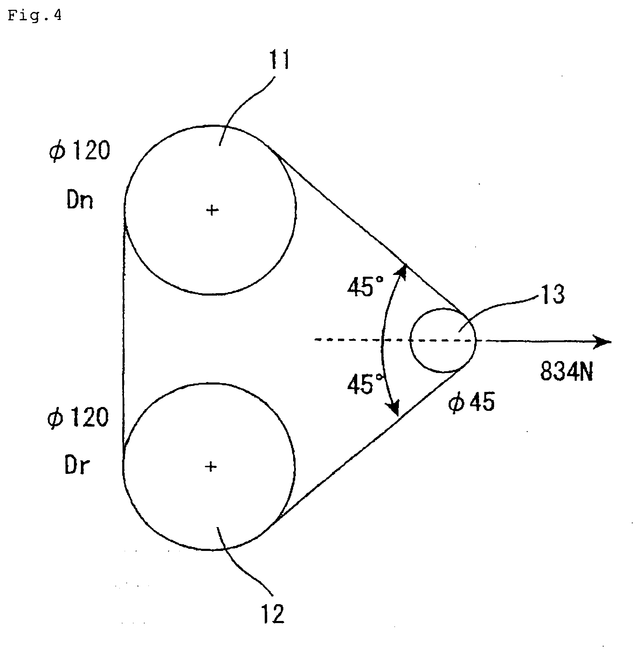

Fig. 4 shows a layout of a belt running tester for durability evaluation of each V-ribbed belt. The belt running tester comprises large diameter rib pulleys (a coupled pulley 11 in the upper side and a driving pulley 12 in the lower side) arranged up and down and having a pulley diameter of 120 mm and a small diameter rib pulley 13 arranged in rightward in the middle of the up and down direction and having a diameter of 45 mm. The small diameter rib pulley 13 was positioned in a manner that the belt rolling angle was to be 90°.
Each V-ribbed belt obtained in the above-mentioned manner was rolled around those three rib pulleys 11 to 13 and the small diameter rib pulley 13 was pulled sideward so as to apply 834N set weight and the belt running test was carried out by rotating the rib pulley 12 in the lower side, which was a drive pulley, at 4900 rpm rotation speed under atmospheric temperature of 23°C. The time until the belt was broken was measured and the time was defined as the belt bending life.

### <Slip sound>

In Fig. 4, during the running of the belt, when water was poured to the drive pulley 12 (2000 cc/minute), generation of slip sound was evaluated.

**Table 1**

| | Example 1 | Example 2 | Example 3 | Example 4 | Example 5 | Comparative Example 1 | Comparative Example 2 |
|---|---|---|---|---|---|---|---|
| EPDM | 100 | 100 | 100 | 100 | 100 | | 100 |
| CR | | | | | | 100 | |
| carbon black (HAF) | 30 | 30 | 30 | 30 | 30 | 30 | 30 |
| silica | 30 | 4 | 60 | 30 | 30 | 50 | 50 |
| silane coupling agent | 5 | 0.4 | 6 | 3 | 3 | 5 | 5 |
| softening agent | 14 | 14 | 14 | 14 | 14 | | 14 |
| plasticizer | | | | | | 5 | |
| zinc oxide | 5 | 5 | 5 | 5 | 5 | 5 | 5 |
| stearic acid | 1 | 1 | 1 | 1 | 1 | 1 | 1 |
| aging prevention agent | 2.5 | 2.5 | 2.5 | 2.5 | 2.5 | 2.5 | 2.5 |
| organic peroxide | 2.5 | 2.5 | 2.5 | 2.5 | 2.5 | | 2.5 |
| MgO | | | | | | 4 | |
| short fibers | 15 | 15 | 15 | 3 | 30 | 15 | 0 |
| slip sound in the case of immersion in water | none | moderate | none | moderate | none | moderate | large |
| belt bending life (hours) | 1000 or longer | 1000 or longer | 768 | 1000 or longer | 600 | 648 | 1000 or longer |
| | | | | | | | |

As apparent form Table 1, the belts of Examples were found generating no slip sound or moderate slip sound and having desirable belt bending life. Further, since the compressed rubber layer had a monolayer structure, the belts were produced simply. On the other hand, the belt of Comparative Example 1 was found generating moderate slip sound at the time of immersion in water and having belt bending life of 648 hours, however chloroprene was used, and it had a problem in terms of environmental issue. The belt of Comparative Example 2 was found generating large slip sound.

### INDUSTRIAL APPLICABILITY

The friction transmission belt of the present invention is preferably usable as a belt for motive power transmission such as a belt for driving of automobile's auxiliaries (dynamo, air conditioner, power steering and the like).

### BRIEF DESCRIPTION OF THE DRAWINGS

Fig. 1 shows a transverse cross-sectional view of one example of a V-ribbed belt.
Fig. 2 shows a transverse cross-sectional view of one example of a low edge belt.
Fig. 3 shows a transverse cross-sectional view of one example of a flat belt.
Fig. 4 shows a layout of a belt running test apparatus.

### DESCRIPTION OF SYMBOLS

1. top canvas layer
2. core wires
3. adhesive rubber layer
4. ribs
5. compressed rubber layer
6. short fibers
7. top rubber layer
11. driven pulley
12. drive pulley
13. rib pulley

## Claims

1. A friction transmission belt
which contains a compressed rubber layer containing an ethylene-α-olefin elastomer, short fibers, and silica and having a monolayer structure.

2. The friction transmission belt according to claim 1,
wherein the content of short fibers is 5 to 25 parts by weight to 100 parts by weight of the ethylene-α-olefin elastomer, and the content of the silica is 5 parts by weight or higher and less than 60 parts by weight to 100 parts by weight of the ethylene-α-olefin elastomer, and the total content of the short fibers and silica is 30 to 65 parts by weight to 100 parts by weight of the ethylene-α-olefin elastomer.

3. The friction transmission belt according to claim 1 or 2, being a V-ribbed belt, a low edge belt, or a flat belt.
